# EUROPEAN PATENT SPECIFICATION

(11) **EP 1 049 607 B1**
(45) Date of publication and mention of the grant of the patent: **09.04.2003**
(21) Application number: 99905389.5
(22) Date of filing: 15.01.1999
(51) Int. Cl.: B60R 21/32, B60R 22/46

(54) **A VEHICLE SAFETY SYSTEM**
SICHERHEITSSYSTEM FÜR FAHRZEUGE
SYSTEME DE SECURITE DE VEHICULE

(30) Priority: 29.01.1998 GB 9801941
(43) Date of publication of application: 08.11.2000
(73) Proprietor: AUTOLIV DEVELOPMENT AKTIEBOLAG, 447 83 Vargarda (SE)
(72) Inventor: DARRABA, Roger, F-78360 Montesson (FR); BOURCART, Denis, F-76220 Gournay-en-Bray (FR)
(74) Representative: Frankland, Nigel Howard
(86) International application number: SE9900044
(87) International publication number: WO99038732

(56) References cited:
- EP-A1- 0 731 003
- EP-A2- 0 421 574
- EP-A2- 0 721 863
- DE-A1- 19 822 263
- US-A- 3 741 584
- US-A- 4 471 918
- US-A- 5 609 358

## Description

**THE PRESENT INVENTION** relates to a vehicle safety system, and more particularly relates to a vehicle safety system which incorporates a plurality of safety devices, such as air-bags or safety-belt pre-tensioners, which are activated by means of a squib.

A typical safety device, such as an air-bag or a pretensioner, typically comprises a squib resistor which is embedded within a pyrotechnic charge. When the safety device is to be deployed, an electric current from a power source is passed through the squib resistor which ignites the pyrotechnic charge.

In order to minimise any risk of inadvertent deployment of the safety device, the circuit which is utilised to connect the squib to the power source should incorporate two switches, with one switch being provided on each side of the squib resistor. It is to be appreciated that in such a situation if, and only if, both switches are closed, will a current pass through the squib resistor to ignite the squib. It is intended that the switches will be closed in response to signals from appropriate sensors which indicate that an accident is likely to occur or is occurring. Thus there is a minimum risk that the safety devices in the vehicle will be inadvertently deployed, for example as a result of a spurious current.

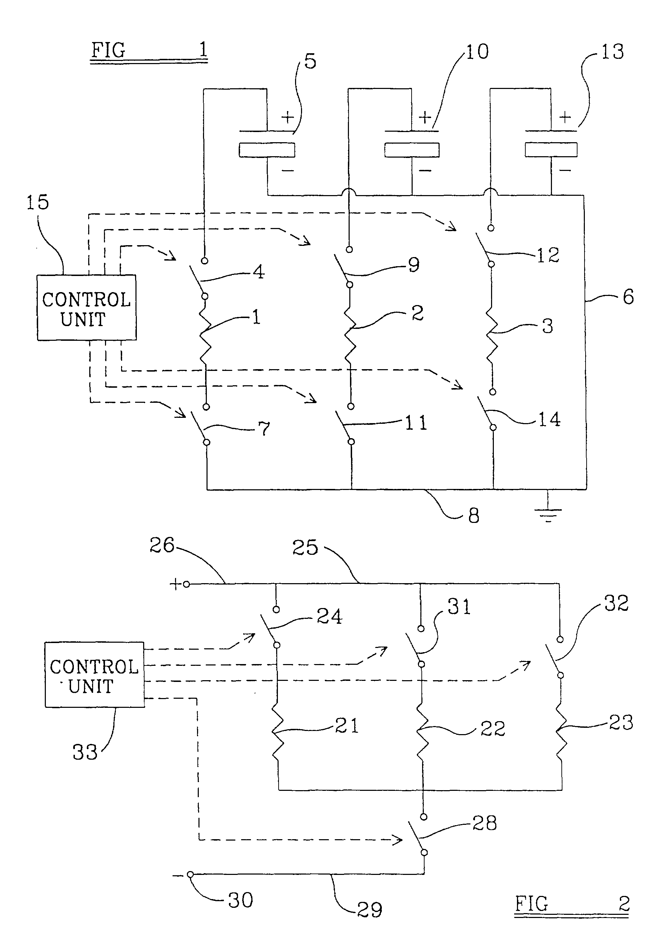

FIGURE 1 is a circuit diagram which illustrates a typical prior proposed vehicle safety system.

Figure 1 illustrates three squibs resistors 1, 2, 3 each of which is associated with a respective safety device. The first squib resistor has one end which is connected by means of a first switch 4 to one pole of a capacitor 5, the other pole of which is connected to earth by means of a lead 6. The other end of the squib resistor 1 is connected by means of a switch 7 to a rail 8 which is also connected to earth.

The second squib resistor 2 has a first end which is connected by means of a switch 9 to one pole of a capacitor 10, the other pole of the capacitor 10 being connected to earth by means of the rail 6. The other end of the squib resistor 2 is connected, by means of a switch 11 to the rail 8 which is also connected to earth. The third squib resistor 3 is provided, at one end, with a switch 12 which is connected to one pole of a capacitor 13, the other pole of which is connected to earth by means of the rail 6. The other end of the squib resistor 3 is provided with a switch 14 which is connected to earth by the rail 8.

The switches (4, 9, 12 and 7, 11, 14) are each individually controlled by a control unit 15.

It is to be appreciated that initially the capacitors 5, 10 and 13 will be charged. If, for example, the control unit causes the switches 4 and 7 to be closed, the capacitor 5 will be discharged through the resultant circuit which comprises the switch 4, the squib 1, the switch 7, the rail 8 and the conductor 6. The safety device associated with the squib resistor 1 will thus be deployed.

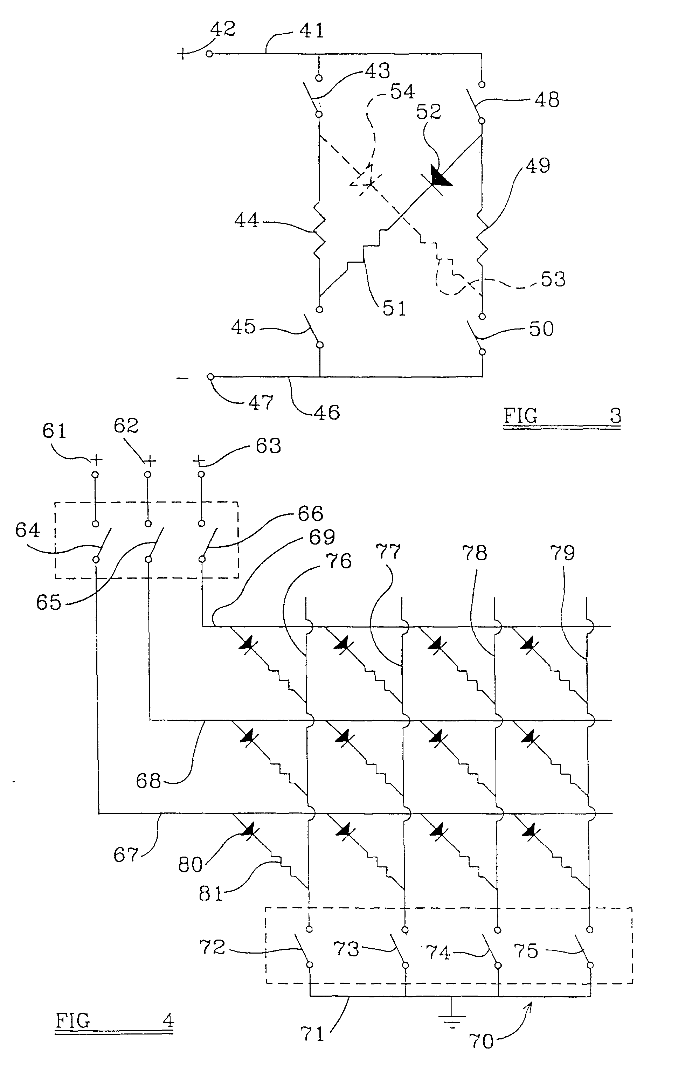

FIGURE 2 is a circuit diagram which illustrates a modified embodiment of the safety system shown in Figure 1 also known in the prior art. Referring to Figure 2, three squib resistors 21, 22, 23 are provided, each of which is associated with a respective safety device. One end of the squib resistor 21 is connected by means of a switch 24 to a rail 25, the rail 25 being connected to a source of potential 26, such as a source of positive potential. The other end of the squib resistor 21 is connected directly to a rail 27 which is connected by means of a single switch 28 to a line 29 which is connected to a further source of potential 30, such as a source of negative potential.

The second squib resistor 22 has one end connected by means of a switch 31 to the rail 25, and has the other end connected directly to the rail 27. The third squib resistor 23 has one end connected by means of a switch 32 to the rail 25, and has the other end connected directly to the rail 27.

The switches (24, 31, 32 and 28) are all individually controlled by a control unit 33. If the control unit 33 closes the switch 28, and then closes one of the switches 24 or 31 or 32, current will flow through a selected squib resistors 21, 22 or 23, depending upon precisely which of the three switches 24, 31, 32 has been closed, thus deploying the respective safety device.

It is to be appreciated that in the arrangement shown in Figure 1, the number of switches is equal to twice the number of squib resistors. In the arrangement shown in Figure 2, the number of switches is equal to the number of squib resistors plus one. Switches are expensive to manufacture, and the present invention seeks to provide a safety system for a vehicle which will operate satisfactorily, but in which manufacturing costs are reduced.

According to this invention there is provided a safety system for a motor vehicle, the safety system incorporating at least one safety device adapted to be activated in the event that an accident should occur, the safety device being provided with at least one electric activator for activating the safety device, there being a plurality of said activators in the complete safety system, the vehicle safety system further comprising at least one source of a first potential and a first group of a plurality of switches, each being connected to a said source of first potential, and at least one source of a different potential, and a second group of a plurality of switches, each being connected to a said source of different potential, the activators being connected in circuit, with each activator being connected between one switch of the first group of switches and one switch of the second group of switches, the arrangement being such that at least one switch in each group is connected to at least two activators, with each of said two activators being connected to different switches of the other group of switches.

Preferably at least one of said activators comprises a squib in the form of a resistor associated with a pyrotechnic charge. In one embodiment at least one activator comprises a solenoid.

Preferably said solenoid is adapted to release a spring biased belt pretensioner.

Conveniently said solenoid is adapted to release the closure of a compressed gas bottle to activate the safety device.

Advantageously the said first potential is a negative potential and the or each source of different potential is a source of positive potential.

Conveniently there are a plurality of sources of second potential, the sources of second potential having the same potential.

Advantageously there are a plurality of sources of second potential, the sources of second potential having different potentials.

Conveniently the sources of potential comprise at least one charged capacitor.

Advantageously the sources of potential comprise a plurality of charged capacitors, the capacitors being charged to different voltages.

In an alternative embodiment there is only one single source of the said different potential.

In a preferred embodiment at least one safety device is provided with a plurality of activators, the identity of the activator or activators utilised to activate the safety device determining the mode of operation of the safety device.

Preferably each switch in each group of switches is connected to the same number of activators as there are switches in the other group of switches.

Conveniently each switch of the first group is connected to a respective rail, forming a first group of rails, and each switch of the second group is connected to a rail, forming a second group of rails, each individual rail in the first group of rails being connected to each individual rail in the second group of rails by means of a respective actuator.

Advantageously each activator comprises a resistor is provided in series with a diode.

Preferably the number of switches in the first group of switches is equal to the number of switches in the second group of switches.

Conveniently the switches of the two groups of switches are individually controlled by means of a control unit, the control unit being responsive to sensors adapted to provide signals in the event that an accident is about to occur or is occurring.

Advantageously the control unit is also responsive to signals from sensor means indicating the presence of or position of an occupant of the vehicle.

In order that the invention may be more readily understood, and so that further features thereof may be appreciated, the invention will now be described by way of example with reference to Figures 3 to 6 of the accompanying drawings in which:
FIGURE 3 is a circuit diagram of part of the triggering circuit for safety devices in a vehicle safety system in accordance with the invention,
FIGURE 4 is a circuit diagram of an alternative triggering circuit,
FIGURE 5 is a circuit diagram of a further alternative triggering circuit, and
FIGURE 6 is a block diagram illustrating a safety device.

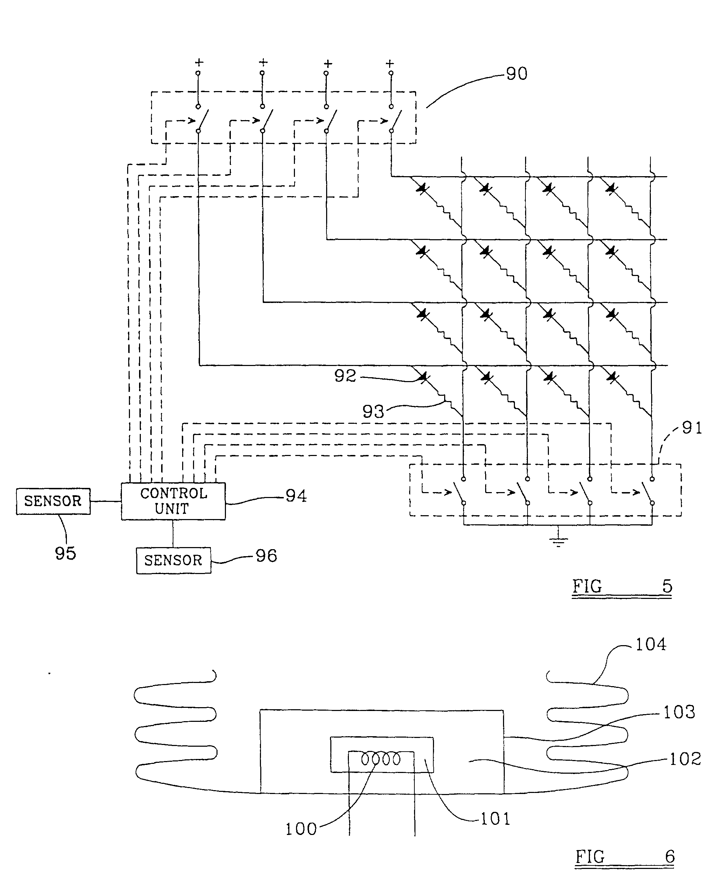

Referring initially to Figure 3, an arrangement is illustrated in which a first rail 41 is connected to a first source of potential 42, which is a source of positive potential. The rail 41 is connected by means of a first switch 43 to one end of a first resistor 44 which forms the squib for a safety device. The squab constitutes an activator for activating the safety device. The safety device may be an air-bag or a seat belt pre-tensioner, for example. The other end of the first resistor 44 is connected by means of a switch 45 to a second rail 46 which is connected to a second source of potential 47, which is a source of negative potential. It will be understood that the two sources of potential are such that when both the switch 43 and the switch 45 is closed, a current will flow between the sources of potential through the resistor 44.

The rail 41 is also connected by means of a third switch 48 to one end of a second resistor 49, which again forms a squib for a safety device. The other end of the resistor 49 is connected by means of a switch 50 to the rail 46. A third resistor 51 is provided, which forms a squib for a further safety device, one end of which is connected by means of a diode 52 to the switch 48, and the other end of which is connected to the switch 45. A fourth resistor 53 (shown in phantom) may also be provided having one end connected by a diode 54 (shown in phantom) to the switch 43, and the other end connected to the switch 50. The fourth resistor will also form a squib for a safety device.

It will be appreciated that if the switch 43 and the switch 45 is closed, current will flow only through the resistor 44, thus causing a safety device in which that resistor forms the squib for the pyrotechnic device to be deployed. Similarly, if the switch 48 and the switch 50 are closed current will flow through the resistor 49, causing the safety device in which the resistor 49 acts as the squib in the pyrotechnic device to be deployed. If, however, the switch 48 and the switch 45 are closed, current will flow through the diode 52 and through the resistor 51, thus causing the safety device in which the resistor 51 is the squib of the pyrotechnic device to be deployed. Equally, if the switch 43 and the switch 50 are closed, current will flow through the diode 54 and the resistor 53, causing the safety device in which the resistor 53 forms the squib in the pyrotechnic charge to be deployed.

Consequently, in this arrangement, although only four switches are provided, it is possible to provide individual control to four resistors, and consequently it is possible to control the deployment of four safety devices merely by using four switches. The reason for this is that each switch is connected to a plurality of resistors.

The diodes 52 and 54 are provided to ensure that current only flows in the intended direction through the resistors 51 and 53.

Referring now to Figure 4, a rather larger arrangement is illustrated which incorporates twelve resistors, each of which forms a squib in a safety device.

Referring now to Figure 4, a plurality of sources 61, 62, 63 of positive potential are shown, although these sources may comprise a single source such as a positive rail. The source or sources of positive potential are connected, by means of three switches 64, 65, 66 to three respective rails 67, 68, 69.

A second source of potential 70 is shown, which in this embodiment comprises an earth rail 71. The earth rail 71 is connected by means of four separate switches 72, 73, 74, 75 to separate rails 76, 77, 78, 79. Each of the three rails 67, 68 and 69 is connected to each of the four rails 76, 77, 78, 79 by means of a respective series connection of a diode, such as the diode 80, and a resistor such as the resistor 81. There are thus twelve diode-and-resistor 80, 81 combinations.

It is to be appreciated that any one of the switches 64, 65 and 66 is closed and also if any one of the switches 72, 73, 74, 75 is closed, current will flow through the diode-and-resistor combination 80, 81 which extends between the rail associated with the selected closed switch 64, 65, or 66 (i.e. the rail 67, 68 or 69) and the rail associated with the closed switch 72, 73, 74 or 75 (i.e. the rail 76, 77, 78 or 79).

Consequently, by closing a selected pair of switches, it is possible to cause current to flow through a selected resistor. Since the resistor forms the squib for a pyrotechnic device, which actuates a safety device in the vehicle, when the current flows the appropriate safety device is deployed.

It will be appreciated, therefore, that in the embodiment described, by using seven switches it is possible to provide individual control for twelve different safety devices.

Figure 5 illustrates a modified embodiment of the arrangement as shown in Figure 4 in which a first group of switches 90 is provided, comprising four switches connected between a first source of potential and a plurality of rails, and a second group of switches 91 is provided, again comprising four switches connected between a second source of potential and a plurality of rails. Each of the rails associated with the first group of switches is connected to each of the rails associated with the second group of switches by a series combination of a diode 92 and a resistor 93. Each resistor 93 may be the squib resistor of a safety device.

The number of switches in each group is the same, and in the embodiment illustrated there are four switches in each group. The switches of the groups 90 and 91 are controlled by a control unit 94. The control unit 94 receives signals from one or more sensors 95 of adapted to sense when an accident is occurring or when an accident is about to occur. Such sensors 95, 96 may comprise acceleration sensors or impact sensors. In response to signals from the sensors 95, 96 the control unit will cause selected pairs of switches to be closed to deploy selected safety devices.

Figure 6 illustrates schematically part of the safety device incorporating a squib as described above in the form of an air-bag. A squib in the form of a resistor 100 is located within a pyrotechnic triggering charge 101, such that when an electric current runs through the resistor 100 and elevates the temperature of the resistor 100, the pyrotechnic charge 101 is activated. The pyrotechnic triggering charge 101 is surrounded by a further gas generating pyrotechnic charge 102 contained within a housing 103. The housing 103 is provided with a plurality of apertures therein (not shown) which direct gas generated by the actuation of the pyrotechnic charge 102 to the interior of an air-bag 104. Thus, when a current flows through the resistor 100, the air-bag 104 is inflated and deployed.

Whilst reference has been made to squib resistors being provided in respective safety devices, it is to be understood that where a safety device with a controlled characteristic is used, there may be more than one squib associated with a single safety device. For example, an air-bag may be provided with two pyrotechnic gas generating charges, each with a separate respective squib.

Depending upon the weight of a person to be protected by the air-bag, and their position in the seat, either one of the gas generating charges, or the other of the gas generating charges, or both of the gas generating charges will be activated. Thus, two squib resistors may be associated with a single safety device.

Groups of switches may be closed to activate predetermined groups of safety devices. The diodes will prevent undesired reverse current flows through resistors when such groups of switches are closed simultaneously.

The sources of potential described above may comprise a single capacitor or may comprise a plurality of individual capacitors. For example, in the embodiment of Figure 3, a single capacitor may be provided connected across the rails 41 and 46.

However, in the embodiment of, for example, Figure 4, a plurality of capacitors may be utilised. For example, three capacitors may be utilised, each having their negative plate connected to the rail 71, and each having their positive plate connected to a respective one of the switches 64,65,66. The potential applied to the three capacitors may vary in that the capacitors may be charged to different voltages. Thus, the sources of positive potential in the embodiment of Figure 4 may be sources having the same potential or may, alternatively, comprise sources having different potentials.

Whilst, in the foregoing description, reference has been made to the use of activators in the form of squibs adapted to ignite a pyrotechnic charge, the invention may be equally applicable for use where activators of a different type are utilised. For example, in an embodiment of the invention there may be at least one activator which comprise a solenoid. It is to be understood that a solenoid may be utilised to release a spring biased belt pre-tensioner, or a solenoid may be utilised to release the closure of a compressed gas bottle to activate a safety device in the form of an air-bag.

## Claims

1. A safety system for a motor vehicle, the safety system incorporating at least one safety device (104) adapted to be activated in the event that an accident should occur, the safety device (104) being provided with at least one electric activator (81) for activating the safety device, (104) there being a plurality of said activators (81) in tne complete safety system, the vehicle safety system further comprising at least one source of a first potential (70) and a first group of a plurality of switches (72,73,74,75), each being connected to a said source of first potential (70), and at least one source of a different potential (61,62,63), and a second group of a plurality of switches (64,65,66), each being connected to a said source of different potential (61,62,63), the activators (81) being connected in circuit, with each activator (44,51,81) being connected between one switch of the first group of switches (72,73,74;75) and one switch of the second group of switches (61,62,63), the arrangement being such that at least one switch in each group is connected to at least two activators (81), with each of said two activators (81) being connected to different switches of the other group of switches.

2. A safety system according to Claim 1 wherein at least one of said activators comprises a squib in the form of a resistor associated with a pyrotechnic charge.

3. A safety system according to Claim 1 or Claim 2 wherein at least one activator comprises a solenoid.

4. A safety system according to Claim 3 wherein said solenoid is adapted to release a spring biased belt pre-tensioner.

5. A safety system according to Claim 3 wherein said solenoid is adapted to release the closure of a compressed gas bottle to activate the safety device.

6. A safety system according to any one of the preceding Claims wherein the said first potential (70) is a negative potential and the or each source of different potential (61,62,63) is a source of positive potential.

7. A safety system according to any one of the preceding Claims wherein there are a plurality of sources of different potential (61,62,63), the sources of different potential having the same potential.

8. A safety system according to any one of Claims 1 to 7 wherein there are a plurality of sources of different potential (61,62;63), the sources of different potential having different potentials.

9. A safety system according to any one of the preceding Claims wherein the sources of potential comprise at least one charged capacitor.

10. A safety system according to Claim 9 wherein the sources of potential comprise a plurality of charged capacitors, the capacitors being charged to different voltages.

11. A safety system according to any one of Claims 1 to 9 wherein there is only one single source of the said different potential (61,62,63)

12. A safety system according to any one of the preceding Claims wherein at least one safety device is provided with a plurality of activators (81), the identity of the activator or activators (81) utilised to activate the safety device determining the mode of operation of the safety device.

13. A safety system according to any one of the preceding Claims when in each switch in each group of switches (64,65,66) is connected to the same number of activators (81) as there are switches in the other group of switches (72,73,74,75).

14. A safety system according to Claim 13 wherein each switch of the first group (64,65,66) is connected to a respective rail (62,68,69), forming a first group of rails, and each switch of the second group (72,73,74,75) is connected to a rail (76,77,78,79), forming the second group of rails, each individual rail in the first group of rails being connected to each individual rail in the second group of rails by means of a respective activator (81).

15. A safety system according to any one of the preceding Claims wherein each activator (81) comprises a resistor (81) which is in series with a diode (80).

16. A safety system according to any one of the preceding Claims in which the number of switches in the first group (64,65,66) of switches is equal to the number of switches in the second group of switches (72,73,74,75).

17. A safety system according to any one of the preceding Claims wherein the switches of the two groups of switches are individually controlled by means of a control unit (94), the control unit (94) being responsive to sensors (95,96) adapted to provide signals in the event of an accident about to occur or is occurring.

18. A safety system according to Claim 17 wherein the control unit (94) is also responsive to signals from sensor means (95,96) indicating the presence of or position of an occupant of the vehicle.

## Patentansprüche

1. Sicherheitssystem für ein Motorfahrzeug, wobei das Sicherheitssystem zumindest eine Sicherheitseinrichtung (104) umfaßt, die dazu bestimmt ist, in dem Falle, daß ein Unfall auftreten sollte, aktiviert zu werden, wobei die Sicherheitseinrichtung (104) mit zumindest einem elektrischen Aktivator (81) versehen ist, um die Sicherheitseinrichtung (104) zu aktivieren, wobei eine Anzahl der genannten Aktivatoren (81) in dem gesamten Sicherheitssystem vorhanden ist, wobei das Fahrzeugsicherheitssystem ferner zumindest eine Quelle (70) eines ersten Potentials und eine erste Gruppe einer Anzahl von Schaltern (72, 73, 74, 75) umfaßt, von denen jeder mit der Quelle (70) des ersten Potentials verbunden ist, und zumindest eine Quelle eines unterschiedlichen Potentials (61, 62, 63), und eine zweite Gruppe einer Anzahl von Schaltern (64, 65, 66), von denen jeder mit der Quelle (61, 62, 63) des unterschiedlichen Potentials verbunden ist, wobei die Aktivatoren (81) in einem Schaltkreis miteinander verbunden sind, wobei jeder Aktivator (44, 51, 81) zwischen einem Schalter der ersten Gruppe von Schaltern (72, 73, 74; 75) und einem Schalter der zweiten Gruppe von Schaltern (61, 62, 63) angeschlossen ist, wobei die Anordnung so ist, daß zumindest ein Schalter in jeder Gruppe mit zumindest zwei Aktivatoren (81) verbunden ist, und wobei jeder der genannten zwei Aktivatoren (81) mit unterschiedlichen Schaltern der anderen Gruppe von Schaltern verbunden ist.

2. Sicherheitssystem nach Anspruch 1, **dadurch gekennzeichnet, daß** zumindest einer der genannten Aktivatoren eine Zündladung in Form eines Widerstands, der einer pyrotechnischen Ladung zugeordnet ist, aufweist.

3. Sicherheitssystem nach Anspruch 1 oder 2, **dadurch gekennzeichnet, daß** zumindest ein Aktivator ein Solenoid umfaßt.

4. Sicherheitssystem nach Anspruch 3, **dadurch gekennzeichnet, daß** der Solenoid dazu bestimmt ist, einen federvorgespannten Gurtstraffer auszulösen.

5. Sicherheitssystem nach Anspruch 3, **dadurch gekennzeichnet, daß** der Solenoid dazu bestimmt ist, den Verschluß eines Gefäßes mit komprimiertem Gas zu lösen, um die Sicherheitseinrichtung zu aktivieren.

6. Sicherheitssystem nach einem der vorangehenden Ansprüche, **dadurch gekennzeichnet, daß** das genannte erste Potential (70) ein negatives Potential ist und die oder jede Quelle (61, 62, 63) eines unterschiedlichen Potentials eine Quelle von positivem Potential ist.

7. Sicherheitssystem nach einem der vorangehenden Ansprüche, **dadurch gekennzeichnet, daß** eine Anzahl von Quellen des unterschiedlichen Potentials (61, 62, 63) vorhanden sind, wobei die Quellen des unterschiedlichen Potentials das gleiche Potential aufweisen.

8. Sicherheitssystem nach einem der Ansprüche 1 bis 7, **dadurch gekennzeichnet, daß** eine Anzähl von Quellen des unterschiedlichen Potentials (61, 62, 63) vorhanden sind, wobei die Quellen des unterschiedlichen Potentials unterschiedliche Potentiale aufweisen.

9. Sicherheitssystem nach einem der vorangehenden Ansprüche, **dadurch gekennzeichnet, daß** die Potentialquellen zumindest einen geladenen Kondensator umfassen.

10. Sicherheitssystem nach Anspruch 9, **dadurch gekennzeichnet, daß** die Potentialquellen eine Anzahl von geladenen Kondensatoren aufweisen, wobei die Kondensatoren auf unterschiedliche Spannungen aufgeladen sind.

11. Sicherheitseinrichtung nach einem der Ansprüche 1 bis 9, **dadurch gekennzeichnet, daß** lediglich eine einzelne Quelle des genannten unterschiedlichen Potentials (61, 62, 63) vorhanden ist.

12. Sicherheitssystem nach einem der vorangehenden Ansprüche, **dadurch gekennzeichnet, daß** zumindest eine Sicherheitseinrichtung mit einer Anzahl von Aktivatoren (81) versehen ist, wobei die Identität des Aktivators oder der Aktivatoren (61), die dazu verwendet werden, die Sicherheitseinrichtung zu aktivieren, den Betriebsmodus der Sicherheitseinrichtung festlegt.

13. Sicherheitssystem nach einem der vorangehenden Ansprüche, **dadurch gekennzeichnet, daß** jeder Schalter in jeder Gruppe von Schaltern (64, 65, 66) mit der gleichen Anzahl von Aktivatoren (81) verbunden ist, wie Schalter in der anderen Gruppe von Schaltern (72, 73, 74, 75) vorhanden sind.

14. Sicherheitssystem nach Anspruch 13, **dadurch gekennzeichnet, daß** jeder Schalter der ersten Gruppe (64, 65, 66) mit einer entsprechenden Schiene (62, 68, 69) verbunden ist, wobei eine erste Gruppe von Schienen gebildet wird, und daß jeder Schalter der zweiten Gruppe (72, 73, 74, 75) mit einer Schiene (76, 77, 78, 79) verbunden ist, wobei eine zweite Gruppe von Schienen gebildet wird, wobei jede einzelne Schiene in der ersten Gruppe von Schienen mit jeder einzelnen Schiene in der zweiten Gruppe von Schienen durch einen jeweiligen Aktuator (81) verbunden ist.

15. Sicherheitssystem nach einem der vorangehenden Ansprüche, **dadurch gekennzeichnet, daß** jeder Aktivator (81) einen Widerstand (81) umfaßt, der in Reihe mit einer Diode (80) geschaltet ist.

16. Sicherheitssystem nach einem der vorangehenden Ansprüche, **dadurch gekennzeichnet, daß** die Anzahl von Schaltern in der ersten Gruppe (64, 65, 66) von Schaltern gleich der Anzahl von Schaltern in der zweiten Gruppe von Schaltern (72, 73, 74, 75) ist.

17. Sicherheitssystem nach einem der vorangehenden Ansprüche, **dadurch gekennzeichnet, daß** die Schalter der beiden Gruppen von Schaltern individuell mittels einer Steuereinheit (94) gesteuert werden, wobei die Steuereinheit (94) auf Sensoren (95, 96) anspricht, die so ausgebildet sind, daß sie Signale in dem Fall bereitstellen, daß ein Unfall auftritt oder in Begriff ist aufzutreten.

18. Sicherheitssystem nach Anspruch 17, **dadurch gekennzeichnet, daß** die Steuereinheit (94) auch auf Signale von einer Sensoreinrichtung (95, 96) anspricht, die die Anwesenheit oder Position eines Insassen des Fahrzeugs angibt.

## Revendications

1. Système de sécurité pour un véhicule à moteur, ledit système de sécuricé incorporant au moins un dispositif de sécurité (104) adapté a être activé dans le cas de l'apparition d'un accident, le dispositif de sécurité (104) étant pourvu d'au moins un activateur électrique (81) pour activer le dispositif de sécurité (104), une pluralité desdits activateurs (81) étant prévus dans le système de sécurité complet, le système de sécurité comprenant en outre au moins une source d'un premier potentiel (70) et un premier groupe d'une pluralité de commutateurs (72, 73, 74, 75), chacun étant connecté à l'une desdites sources de premier potentiel (70), et au moins une source d'un potentiel différent (61, 62, 63) et un deuxième groupe d'une pluralité de commutateurs (64, 65, 66), chacun étant connecté à l'une desdites sources d'un potentiel différent (61, 62, 63), les activateurs (81) étant connectés en circuit, chaque activateur (44, 51, 81) étant connecté entre un commutateur du premier groupe de commutateurs (72, 73, 74, 75) et un commutateur du deuxième groupe de commutateurs (61, 62, 63), l'agencement étant tel qu'au moins un commutateur dans chaque groupe est connecté à au moins deux activateurs (81), chacun desdits deux activateurs (81) étant connecté à des commutateurs différents de l'autre groupe de commutateurs.

2. Système de sécurité selon, la revendication 1, dans lequel l'un au moins desdits activateurs comprend un détonateur sous la forme d'une résistance associée à une charge pyrotechnique.

3. Système de sécurité selon l'une ou l'autre des revendications 1 et 2, dans lequel au moins un activateur comprend un solénoïde.

4. Système de sécurité selon la revendication 3, dans lequel ledit solénoïde est adapté à libérer un prétensionneur de ceinture chargé par ressort.

5. Système de sécurité selon la revendication 3, dans lequel ledit solénoïde est adapté à libérer la fermeture d'une bouteille de gaz comprimé pour activer le dispositif de sécurité.

6. Système de sécurité selon l'une quelconque des revendications précédentes, dans lequel ledit premier potentiel (70) est un potentiel négatif et la ou chaque source de potentiel différent (61, 62, 63) est une source de potentiel positif.

7. Système de sécurité selon l'une quelconque des revendications précédentes, dans lequel sont prévues une pluralité de sources de potentiel différent (61, 62, 63), les sources de potentiel différent ayant le même potentiel.

8. Système de sécurité selon l'une quelconque des revendications 1 à 7, dans lequel sont prévues une pluralité de sources de potentiel différent (61, 62, 63), les sources de potentiel différent ayant des potentiels différents.

9. Système de sécurité selon l'une quelconque des revendications précédentes, dans lequel ses sources de potentiel comprennent au moins une capacité chargée.

10. Système de sécurité selon la revendication 9, dans lequel les sources de potentiel comprennent une pluralité de capacités chargées, les capacités étant chargées à des voltages différents.

11. Système de sécurité selon l'une quelconque des revendications 1 à 9, dans lequel est prévue une source unique dudit potentiel différent (61, 62, 63).

12. Système de sécurité selon l'une quelconque des revendications précédentes, dans lequel au moins un dispositif de sécurité est pourvu d'une pluralité d'activateurs (80), l'identité de l'activateur ou des activateurs (81) utilisé(s) pour activer le dispositif de sécurité déterminant le mode de fonctionnement du dispositif de sécurité.

13. Système de sécurité selon l'une quelconque des revendications précédentes, dans lequel chaque commutateur dans chaque groupe de commutateurs (64, 65, 66) est connecté au même nombre d'activateurs (82) qu'il y a de commutateurs dans l'autre groupe de commutateurs (72, 73, 74, 75).

14. Système de sécurité selon la revendication 13, dans lequel chaque commutateur du premier groupe (64, 65, 66) est connecté à un rail respectif ( 67, 68, 69), en formant un premier groupe de rails, et chaque commutateur du deuxième groupe (72, 73 74, 75) est connecté à un rail (76, 77, 78, 79) en formant un deuxième groupe de rails, chique rail individuel dans le premier groupe de rails étant connecté à chaque rail individuel dans le deuxième groupe de rails au moyen d'un activateur respectif (81).

15. Système de sécurité selon l'une quelconque des revendications précédentes, dans lequel chaque activateur (81) comprend une résistance (81) qui est montée en série avec une diode (81).

16. Système de sécurité selon l'une quelconque des revendications précédentes, dans lequel le nombre de commutateurs dans le premier groupe de commutateurs (64, 65, 66) est égal au nombre de commutateurs dans le deuxième groupe de commutateurs (72, 73, 74, 75).

17. Système de sécurité selon l'une quelconque des revendications précédentes, dans lequel les commutateurs des deux groupes de commutateurs sont commandés individuellement au moyen d'une unité de commande (94), l'unité de commende (94) réagissant à des capteurs (95, 96) adaptés à fournir des signaux dans le cas de l'apparition ou de l'imminence d'un accident.

18. Système de sécurité selon la revendication 17, dans lequel l'unité de commande (94) réagit également à des signaux provenant d'organes capteurs (95, 96) indiquant la présence ou la position d'un occupant du véhicule.
